# EUROPÄISCHE PATENTSCHRIFT

(11) **EP 4 063 057 B1**
(45) Veröffentlichungstag und Bekanntmachung des Hinweises auf die Patenterteilung: **19.02.2025**
(21) Anmeldenummer: 22162724.3
(22) Anmeldetag: 17.03.2022
(51) Int. Cl.: B23K 11/11, B23K 11/18, B23K 11/25, B23K 101/00, B23K 101/18, B23K 103/10

(54) **VERFAHREN ZUM WIDERSTANDSSCHWEISSEN VON WERKSTÜCKEN**
METHOD FOR THE RESISTANCE WELDING OF WORKPIECES
PROCÉDÉ DE SOUDAGE PAR RÉSISTANCE DE PIÈCES

(30) Priorität: 25.03.2021 DE 102021202908
(43) Veröffentlichungstag der Anmeldung: 28.09.2022
(73) Patentinhaber: Robert Bosch GmbH, 70442 Stuttgart (DE)
(72) Erfinder: Haeufgloeckner, Juergen, 63936 Schneeberg (DE)

(56) Entgegenhaltungen:
- DE-A1- 10 224 402
- DE-A1- 4 332 807
- DE-C1- 10 144 286

## Beschreibung

Die vorliegende Erfindung betrifft ein Verfahren zum Widerstandsschweißen von Werkstücken sowie ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst im Zuge einer sog. Kraftaufbauphase zwei Schweißelektroden einer Schweißzange mit Hilfe eines Elektrodenantriebs gegen einen Schweißpunkt der Werkstücke gepresst, bis eine vorgegebene Elektrodenkraft erreicht ist. Nach Erreichen der vorgegebenen Elektrodenkraft können die Schweißelektroden noch für die Dauer einer sog. Vorhaltephase unbestromt gegen den Schweißpunkt gepresst werden. Anschließend erfolgt der eigentliche Schweißprozess, im Zuge dessen die Schweißelektroden für die Dauer einer Schweißzeit bzw. Stromzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden. Nach dem Ende der Schweißzeit und nachdem die Bestromung der Schweißelektroden beendet wurde, erfolgt die sog. Nachhaltephase, während welcher die Schweißelektroden noch mit der Elektrodenkraft gegen den Schweißpunkt der Werkstücke gepresst, aber nicht mehr mit dem Schweißstrom bestromt werden.

Beispielsweise beschreibt die DE 102 24 402 A1 eine Schweißzange zum elektrischen Widerstandsschweißen mit zwei Elektroden, von denen mindestens eine an einem Elektrodenarm befestigt ist, Mitteln zum Bewegen von mindestens einem Elektrodenarm, wobei jeder Elektrodenarm endseitig von einer Elektrodenarmhalterung aufgenommen wird, Mitteln zum Erzeugen des Schweißstromes und einem Kraftsensor zur Erfassung eines Kraftistwertes zwischen den beiden Elektroden, wobei der Kraftsensor an einer der Elektrodenarmhalterungen angeordnet ist.

Beispielsweise beschreibt die DE 101 44 286 C1 ein Verfahren zur Beurteilung der Qualität einer Schweißverbindung von mindestens zwei Blechteilen beim elektrischen Widerstandsschweißen mittels einer Schweißzange mit zwei Elektroden, einer elektrisch angetriebenen, nicht selbsthemmenden Spindel zum Bewegen mindestens einer der beiden Elektroden, Mitteln zum Erzeugen des Schweißstromes, einer Zangensteuerung, einer Positionsregelung für den elektrischen Antrieb, Mitteln zum Erfassen der Spindelposition sowie einem Leistungsteil, umfassend eine Drehzahlregelung und einen Leistungsschalter für den elektrischen Antrieb, wobei das Leistungsteil einen Drehzahlsollwerteingang, einen Strombegrenzungseingang, einen Stromistwertausgang, einen Spindelpositionsistwertausgang und einen mit dem Antrieb verbundenen Ausgang für das Motorleistungskabel aufweist, bei dem zumindest während der Schweißung die Positionsregelung aktiviert wird und die Zangensteuerung Änderungen des zum Antriebsmoment proportionalen Istwertes des Stromes am Stromistwertausgang des Leistungsteils erfasst und auswertet.

### Offenbarung der Erfindung

Vor diesem Hintergrund werden ein Verfahren zum Widerstandsschweißen von Werkstücken sowie ein Schweißgerät und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Schweißelektroden werden mit Hilfe eines Elektrodenantriebs mit einer Elektrodenkraft gegen einen Schweißpunkt der Werkstücke gepresst und im Zuge eines Schweißprozesses werden die Schweißelektroden für die Dauer einer Schweißzeit mit einem Schweißstrom bestromt. Die Schweißstromstärke kann zu Beginn des Schweißprozesses im Zuge einer sog. Stromaufbauphase bis zu einem vorgegebenen Wert erhöht werden und am Ende des Schweißprozesses im Zuge einer sog. Stromabbauphase bis auf den Wert Null verringert werden.

Nach einem Ende der Schweißzeit, also nach einem Ende der Bestromung mit dem Schweißstrom, werden die Schweißelektroden im Zuge einer Nachhaltephase nicht mehr mit dem Schweißstrom bestromt, aber noch mit Hilfe des Elektrodenantriebs mit der Elektrodenkraft gegen den Schweißpunkt gepresst. Währenddessen kann der Schweißpunkt abkühlen.

Im Rahmen des vorliegenden Verfahrens wird im Zuge dieser Nachhaltephase ein zeitlicher Verlauf eines eine Schweißelektrodenposition einer oder beider Schweißelektroden kennzeichnenden Schweißelektrodenparameters bestimmt und es wird überprüft, ob dieser zeitliche Verlauf des Schweißelektrodenparameters wenigstens ein charakteristisches Merkmal erfüllt. In Abhängigkeit von dieser Überprüfung wird bestimmt, wann die Nachhaltephase beendet wird und wann somit die Schweißelektroden von dem Schweißpunkt der Werkstücke entfernt bzw. wegbewegt werden können.

Nachdem die Werkstücke durch den Schweißstrom im Zuge des Schweißprozesses erhitzt wurden, kühlen die Werkstücke nach dem Abschalten des Schweißstroms ab. Im Zuge der Nachhaltephase sollen die Werkstücke an dem Schweißpunkt zweckmäßigerweise noch so lange gegeneinander gepresst werden, bis der Schweißpunkt so weit abgekühlt bzw. erkaltet ist, dass eine notwendige Festigkeit erreicht ist und die Werkstücke fest miteinander verbunden sind. Wird die Nachhaltephase zu kurz gewählt und werden die Schweißelektroden zu früh von dem Schweißpunkt entfernt, kann sich die Schweißverbindung aufgrund der vorhandenen Spannungen wieder lösen und die Werkstücke können an dem Schweißpunkt aufspringen.

Das vorliegende Verfahren stellt eine Möglichkeit bereit, um die Dauer bzw. das Ende der Nachhaltephase automatisch und optimal an den jeweiligen Schweißpunkt angepasst zu bestimmen. Der vorliegenden Erfindung liegt dabei die Erkenntnis zugrunde, dass sich eine thermische Ausdehnung des Schweißguts aufgrund des Stromflusses während der Schweißzeit ebenso wie das umgekehrte Verhalten des Abkühlens nach dem Ende des Stromflusses in dem zeitgleichen Verlauf der Elektrodenbewegung widerspiegeln. Anhand des zeitlichen Verlaufs der Elektrodenbewegung kann somit insbesondere auf den Abkühlvorgang des Schweißpunkts rückgeschlossen werden.

Der die Schweißelektrodenposition der Schweißelektrode(n) kennzeichnende Schweißelektrodenparameter charakterisiert insbesondere eine aktuelle Lage bzw. Position einer oder beider Schweißelektroden oder eines die Schweißelektrode(n) bewegenden Antriebs. Das Abkühlen des Schweißpunkts und die damit verknüpfte Verringerung der Wärmeausdehnung führt dazu, dass sich die Schweißelektroden am Schweißpunkt aufeinander zu bewegen, was sich in einem entsprechenden zeitlichen Verlauf dieses Schweißelektrodenparameters widerspiegelt, von welchem auf die aktuelle Lage bzw. Position der Schweißelektroden rückgeschlossen werden kann.

Der Abkühlvorgang schlägt sich besonders vorteilhaft auf charakteristische Art in dem zeitlichen Verlauf des Schweißelektrodenparameters nieder. Bei einer ausreichend langen Abkühlung des Schweißpunkts, im Zuge derer die Schweißverbindung die notwendige Festigkeit erreicht hat, finden sich besonders zweckmäßig die entsprechenden charakteristischen Merkmale in dem zeitlichen Verlauf des Schweißelektrodenparameters. Wenn also im Zuge der Überprüfung des zeitlichen Verlaufs des Schweißelektrodenparameters das bzw. die entsprechenden charakteristischen Merkmale erkannt werden, wird die Nachhaltephase zweckmäßigerweise beendet.

Das charakteristische Merkmal ist zweckmäßigerweise als ein den Abkühlvorgang des Schweißpunkts charakterisierendes Merkmal bzw. ein für diesen Abkühlvorgang charakteristisches Merkmal zu verstehen. Besonders zweckmäßig ist das charakteristische Merkmal als ein Merkmal zu verstehen, welches ein ausreichendes Abkühlen des Schweißpunkts charakterisiert, so dass eine notwendige Festigkeit der Schweißverbindung erreicht ist.

Durch das vorliegende Verfahren kann das entsprechende Schweißgerät bzw. die entsprechende Steuereinheit oder Schweißsteuerung automatisch die Nachhaltezeit so lange durchführen, bis die Schweißverbindung die nötige Festigkeit erreicht hat, so dass ein Lösen der Schweißverbindung bzw. ein Aufspringen der Werkstücke an dem Schweißpunkt verhindert wird. Insbesondere ist keine zusätzliche Parametrierung oder keine zusätzliche Vermessung der Werkstücke nötig, sondern die ausreichende Dauer wird automatisch und online während der Nachhaltephase von dem Schweißgerät selbst bestimmt.

Die ausreichende Dauer der Nachhaltephase hängt im Allgemeinen insbesondere von den speziellen Materialien der zu verschweißenden Werkstücke sowie von deren Blechdickenkombination (BDK) ab, also von den Dicken der zu verschweißenden Werkstücke, und ferner insbesondere von der Schweißpunktlage, also von der Orientierung der Schweißelektroden relativ zu dem Schweißpunkt bzw. relativ zu den Oberflächen der Werkstücke. Beispielsweise kann dies zur Folge haben, dass für Schweißpunkte mit gleicher Blechdickenkombination, jedoch mit unterschiedlichen Schweißpunktlagen auch unterschiedlich lange Nachhaltephasen benötigt werden, um eine ausreichende Festigkeit zu erreichen. Herkömmlicherweise kann die Dauer der Nachhaltephase oftmals nur schwer oder aufwendig parametriert werden, da diese einzelnen Faktoren wie Blechdickenkombination und Schweißpunktlage explizit für jeden Schweißpunkt berücksichtigt werden müssen. Oftmals wird daher für alle Schweißpunkt derselbe Grundwert eingestellt. Durch das vorliegende Verfahren wird derartigen Faktoren automatisch und implizit Rechnung getragen, ohne dass diese Faktoren für die Bestimmung der ausreichend langen Nachhaltephase explizit berücksichtigt werden müssen. Das vorliegende Verfahren ist daher beispielsweise besonders vorteilhaft für Prozesse, bei welchem eine Vielzahl von Schweißpunkten mit komplexen, verschiedenen Blechdickenkombinationen jeweils unter individuellen, verschiedenen Schweißpunktlagen miteinander zu verschweißen ist, wie z.B. den Karosseriebau.

Ferner kann durch das vorliegende Verfahren beispielsweise auch bei nicht optimal oder fehlerhaft ausgerichteten Schweißelektroden oder bei nicht optimalen Werkstück- bzw. Blechanpressungen, was zu einer Spaltsituation zwischen den zu verbindende Werkstücken führen kann, dennoch eine ausreichend lange Nachhaltephase durchgeführt werden, um eine ausreichende Festigkeit des Schweißpunkts zu erreichen.

Erfindungsgemäß erfüllt der zeitliche Verlauf des Schweißelektrodenparameters das wenigstens eine charakteristische Merkmal, wenn ein Wert des Schweißelektrodenparameters, insbesondere ein Absolutwert oder eine Amplitude, einen Parameterschwellwert erreicht. Insbesondere charakterisiert dieser Parameterschwellwert eine Dicke des Schweißpunkts, besonders zweckmäßig einen vorgegebenen oder vorgebbaren Endwert der Verringerung der thermischen Ausdehnung. Wenn der Schweißpunkt ausreichend abgekühlt ist und sich die thermische Ausdehnung ausreichend verringert hat, fällt die Dicke des Schweißpunkts insbesondere unter einen bestimmten Dickenschwellwert, welcher sich besonders zweckmäßig in dem Parameterschwellwert für die Schweißelektrodenposition widerspiegelt.

Alternativ oder zusätzlich erfüllt der zeitliche Verlauf des Schweißelektrodenparameters erfindungsgemäß das wenigstens eine charakteristische Merkmal, wenn eine Steigung des zeitlichen Verlaufs des Schweißelektrodenparameters einen Gradientenschwellwert erreicht. Dieser Gradientenschwellwert der Steigung charakterisiert insbesondere die Verringerung der Geschwindigkeit der thermischen Schrumpfung des Schweißpunkts. Wenn der Schweißpunkt ausreichend abgekühlt und ausreichend ausgehärtet ist, bewegen sich die Schweißelektroden immer langsamer aufeinander zu, was zweckmäßigerweise durch diesen Gradientenschwellwert für die Schweißparametersteigung charakterisiert wird.

Erfindungsgemäß wird das wenigstens eine charakteristische Merkmal zumindest teilweise in Abhängigkeit von einer Vorhaltephase bzw. von einem Wert des Schweißelektrodenparameters in der Vorhaltephase vorgegeben, wobei die Schweißelektroden im Zuge dieser Vorhaltephase vor einem Beginn des Schweißprozesses für eine vorgegebene Zeitdauer mit der Elektrodenkraft gegen den Schweißpunkt der Werkstücke gepresst werden und noch nicht mit dem Schweißstrom bestromt werden. Diese Vorhaltephase findet zweckmäßigerweise zwischen der Kraftaufbauphase und dem eigentlichen Schweißprozess statt. Zweckmäßigerweise kann der Schweißpunkt dabei vor Beginn des Schweißprozesses untersucht werden und es kann darauf geschlossen werden, wie sich der Abkühlvorgang nach dem Schweißprozess verhalten sollte, um eine ausreichende Festigkeit dieses speziellen Schweißpunkts zu erreichen. Besonders zweckmäßig werden dabei implizit bzw. automatisch die speziellen Eigenschaften des jeweiligen Schweißpunkts berücksichtigt, insbesondere das spezielle Material der Werkstücke sowie die jeweilige Blechdickenkombination und ferner insbesondere die jeweilige Schweißpunktlage.

Erfindungsgemäß wird im Zuge der Vorhaltephase ein zeitlicher Verlauf des Schweißelektrodenparameters bestimmt, insbesondere auf entsprechende Weise zu dem zeitlichen Verlauf während der Nachhaltphase. Das wenigstens eine charakteristische Merkmal wird erfindungsgemäß zumindest teilweise in Abhängigkeit von diesem im Zuge der Vorhaltephase bestimmten zeitlichen Verlauf des Schweißelektrodenparameters bestimmt. Insbesondere kann während der Vorhaltephase erlernt oder untersucht werden, wie sich die Schweißelektrodenposition bzw. der Schweißelektrodenparameter bei der entsprechenden Elektrodenkraft relativ zu dem Schweißpunkt vor dem Schweißprozess verhält. Basierend auf diesen Erkenntnissen kann zweckmäßigerweise darauf geschlossen oder extrapoliert werden, wie sich der Schweißelektrodenparameter nach dem Schweißprozess und während der Abkühlung des Schweißpunkts verhalten sollte. Zweckmäßigerweise können für den jeweiligen Schweißpunkt individuelle und charakteristische Merkmale für den Schweißparameterverlauf während der Vorhaltephase erlernt werden.

Besonders bevorzugt wird der Parameterschwellwert für den Schweißelektrodenparameter in Abhängigkeit von dem im Zuge der Vorhaltephase bestimmten zeitlichen Verlauf des Schweißelektrodenparameters bestimmt. Besonders zweckmäßig kann anhand des Schweißelektrodenparameters und der damit verknüpften Schweißelektrodenposition während der Vorhaltephase die Dicke der Werkstücke an dem Schweißpunkt vor Beginn des Schweißprozesses untersucht werden. Basierend auf dieser Kenntnis kann zweckmäßigerweise darauf geschlossen werden, wie sich die Dicke des Schweißpunkts während des Schweißprozesses und während des Abkühlvorgangs verhalten sollte.

Insbesondere kann darauf geschlossen werden, welche Dicke der Schweißpunkt bei ausreichender Abkühlung maximal aufweisen sollte und somit ab welchem Parameterschwellwert des Schweißelektrodenparameters die Nachhaltephase beendet werden kann. Schweißpunktlage, Blechdickenkombination und Material der Werkstücke werden dabei besonders zweckmäßig automatisch berücksichtigt.

Vorteilhafterweise wird ferner im Zuge der Nachhaltephase überprüft, ob eine Dauer der Nachhaltephase einen vorgegebenen Minimalwert erreicht und/oder einen vorgegebenen Maximalwert erreicht. Zweckmäßigerweise kann somit als ein zusätzliches Sicherheitskriterium überwacht werden, ob die Nachhaltephase basierend auf der Überprüfung des Schweißelektrodenparameters zu einem plausiblen Zeitpunkt beendet wird.

Besonders vorteilhaft wird eine vorgegebene Maßnahme durchgeführt, wenn die Nachhaltephase basierend auf der Überprüfung des zeitlichen Verlaufs des Schweißelektrodenparameters beendet wird oder würde, bevor die Dauer der Nachhaltephase den vorgegebenen Minimalwert erreicht. Insbesondere deutet dies darauf hin, dass die Nachhaltephase zu kurz gewählt wurde und der Schweißpunkt noch nicht ausreichend abgekühlt ist, um eine ausreichende Festigkeit aufzuweisen. Zweckmäßigerweise kann in diesem Fall als vorgegebene Maßnahme die Nachhaltephase wenigstens so lange weiter durchgeführt, bis deren Dauer den vorgegebenen Minimalwert erreicht.

Ferner wird besonders vorteilhaft eine vorgegebene Maßnahme durchgeführt, wenn die Nachhaltephase basierend auf der Überprüfung des zeitlichen Verlaufs des Schweißelektrodenparameters nicht beendet wird oder würde, bevor die Dauer der Nachhaltephase den vorgegebenen Maximalwert erreicht. Insbesondere wird dieser Maximalwert ausreichend groß gewählt, so dass nach dieser maximalen Dauer der Schweißpunkt ausreichend ausgekühlt und ausgehärtet sein sollte. Insbesondere wird die Nachhaltephase in diesem Fall als vorgegebene Maßnahme beendet, nachdem die Dauer den vorgegebenen Minimalwert erreicht hat.

In diesen beiden Fällen kann insbesondere ein Fehler vorliegen, so dass die Nachhaltephase zu kurz gewählt wurde oder nicht rechtzeitig beendet wurde. Vorzugsweise kann als vorgegebene Maßnahme daher ferner jeweils eine entsprechende Fehlermeldung ausgegeben werden.

Erfindungsgemäß wird als der Schweißelektrodenparameter ein Antriebsparameter des Elektrodenantriebs bestimmt. Als Antriebsparameter seien in diesem Zusammenhang insbesondere Größen bzw. Parameter zu verstehen, welche im Zuge einer Regelung bzw. Steuerung des Elektrodenantriebs bestimmt werden, um die Schweißelektroden auf vorgegebene Weise zu bewegen und gegen die Werkstücke zu pressen. Insbesondere charakterisieren die Antriebsparameter die aktuelle Lage bzw. Position oder Bewegung der Schweißelektroden. Von aktuellen Werten bzw. zeitlichen Verläufen der Antriebsparameter kann daher zweckmäßigerweise auf die aktuelle Lage der Schweißelektroden rückgeschlossen werden und davon ausgehend wiederum auf den Schweißpunkt der Werkstücke. Daher bieten sich die Antriebsparameter besonders für die Überprüfung des Abkühlvorgangs an. Die Verringerung der Wärmeausdehnung der Werkstücke nach dem Schweißprozess führt dazu, dass die Schweißelektroden aufeinander zu bzw. auf den Schweißpunkt zu bewegt werden, was sich in dem zeitlichen Verlauf bestimmter Antriebsparameter widerspiegelt, von welchen auf die aktuelle Lage bzw. Position der Schweißelektroden rückgeschlossen werden kann.

Bevorzugt wird als der Schweißelektrodenparameter ein Lageistwert einer oder beider Elektroden des Elektrodenantriebs bestimmt, also insbesondere die aktuelle Lage bzw. Position einer oder beider Schweißelektroden. Beispielsweise kann der Lageistwert dabei relativ zu dem Schweißpunkt bzw. den Werkstücken bestimmt werden oder zweckmäßigerweise auch in Relation zu einem Referenzpunkt des Schweißgeräts, insbesondere zu einer Ruhelage der Schweißelektroden. Insbesondere charakterisiert die Lage bzw. der Lageistwert die Position der Elektrodenkappen im Raum. Ferner wird insbesondere nur eine Achse betrachtet, zweckmäßigerweise eine Achse in Bewegungsrichtung der Elektroden, welche durch einen Lageistwert eines die Elektroden öffnenden und schließenden Antriebs gegeben sein kann.

Alternativ oder zusätzlich wird bevorzugt ein Drehmomentistwert des Elektrodenantriebs als der Schweißelektrodenparameter bestimmt. Ein Motor des Elektrodenantriebs, beispielsweise ein Servomotor, gibt insbesondere ein Drehmoment an eine Antriebsspindel des Elektrodenantriebs ab. Dadurch stellt sich abhängig von mechanischen Parametern insbesondere eine gewisse Kraft ein, deren Istwert zweckmäßigerweise auf einen Sollwert geregelt wird, wozu insbesondere der Drehmomentistwert entsprechend verändert wird. Insbesondere ist die Elektrodenkraft eine von diesem Drehmoment abgeleitete Größe.

Alternativ oder zusätzlich können beispielsweise auch Antriebsparameter wie ein Drehzahlistwert und/oder ein Drehzahlsollwert und/oder ein drehmomentbildender Strom und/oder ein Beschleunigungsistwert und/oder eine Zangenschließgeschwindigkeit des Elektrodenantriebs als der Schweißelektrodenparameter bestimmt. Insbesondere kann auch von derartigen Antriebsparametern auf die Lage bzw. Position der Schweißelektrode(n) und somit auf den Schweißpunkt während des Abkühlvorgangs rückgeschlossen werden.

Besonders vorteilhaft eignet sich das vorliegende Verfahren für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte mit mehreren hundert verschiedenen Blechdickenkombinationen automatisiert bearbeitet werden, z.B. ca. 5.000 Schweißpunkte mit ca. 700 verschiedenen Blechdickenkombinationen für ein Mittelklasse-Fahrzeug. Durch das Verfahren kann automatisch für jeden dieser einzelnen Schweißpunkte online die bestmögliche Nachhaltephase bestimmt werden, zweckmäßigerweise ohne dass es manueller Eingriffe oder zusätzlicher Parametrierungen bedarf. Durch das Verfahren können die einzelnen Schweißpunkte mit bestmöglicher Qualität verschweißt werden.

Eine Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist eine Schweißzange mit Schweißelektroden sowie einen Elektrodenantrieb zum Bewegen der Schweißelektroden auf. Ferner umfasst das Schweißgerät eine Steuereinheit.

Auch die Implementierung eines erfindungsgemäßen Verfahrens in Form eines Computerprogramms mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.
- Figur 3: zeigt schematisch zeitliche Verläufe von Schweißelektrodenparametern, die jeweils im Zuge einer bevorzugten Ausführungsform eines erfindungsgemäßen Verfahrens bestimmt werden können.
- Figur 4: zeigt schematisch zeitliche Verläufe von Lageistwerten von Schweißelektroden, die jeweils im Zuge einer bevorzugten Ausführungsform eines erfindungsgemäßen Verfahrens bestimmt werden können.

### Detaillierte Beschreibung der Zeichnung

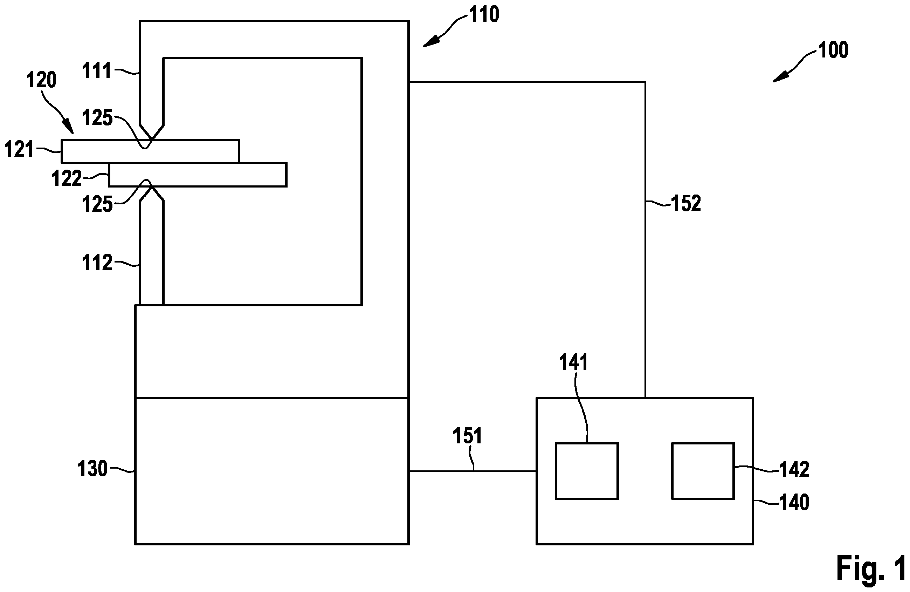

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißens werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt.

Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 zu regeln, angedeutet durch Bezugszeichen 151, und ferner den Schweißprozess, angedeutet durch Bezugszeichen 152. Zu diesem Zweck werden in der Steuereinheit 140 eine entsprechende Antriebsregelung 141 und eine entsprechende Schweißprozessregelung 142 durchgeführt, welche jeweils als entsprechende Steuerungsprogramme oder auch als ein gemeinsames Steuerungsprogramm implementiert sein können.

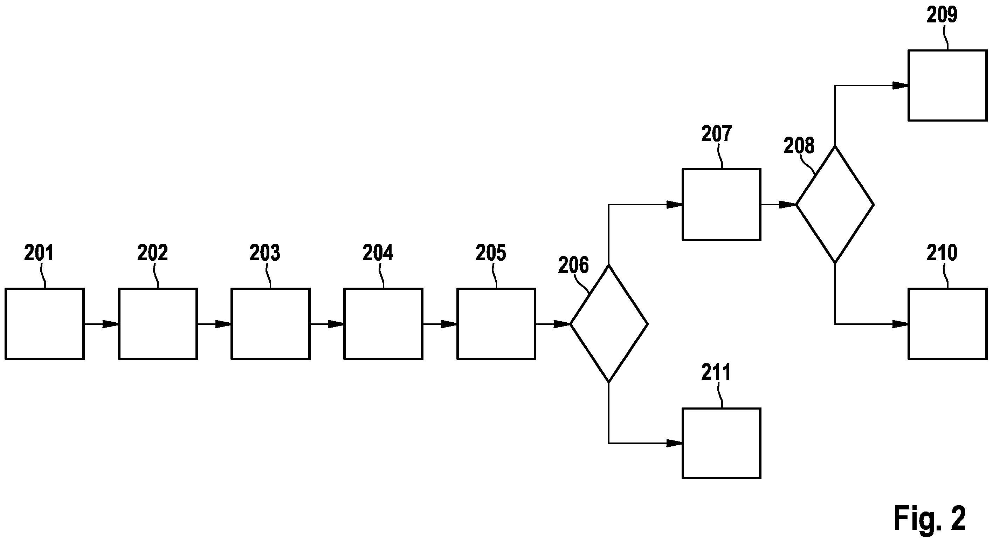

Die Steuereinheit 140 ist ferner, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

In einem Schritt 201 erfolgt zunächst die Kraftaufbauphase, im Zuge derer die Schweißelektroden 111 und 112 mit Hilfe des Elektrodenantriebs 130 an dem Schweißpunkt 125 gegen die Bleche 121 und 122 gedrückt werden, bis die vorgegebene Elektrodenkraft erreicht ist.

Schritt 202 bezeichnet eine sog. Vorhaltephase, während welcher die Schweißelektroden 111, 112 mit der Elektrodenkraft vor Beginn des Schweißprozesses gegen den Schweißpunkt 125 der Werkstücke 121, 122 gepresst werden, aber noch nicht mit dem Schweißstrom bestromt werden. Während dieser Vorhaltephase wird ein zeitlicher Verlauf eines eine Schweißelektrodenposition einer oder beider Schweißelektroden kennzeichnenden Schweißelektrodenparameters bestimmt, beispielsweise ein zeitlicher Verlauf eines Lageistwerts des Elektrodenantriebs 130, welcher die aktuelle Lage der Schweißelektroden 111, 112 charakterisiert.

In Schritt 203 wird abhängig von diesem zeitlichen Verlauf des Lageistwerts ein Schwellwert für einen Absolutwert des Lageistwerts als Parameterschwellwert bestimmt. Beispielsweise kann der Parameterschwellwert abhängig von einem aktuellen Lageistwert bestimmt werden, welcher insbesondere eine aktuelle Position der Schweißelektroden 111, 112 relativ zu dem Schweißpunkt 125 und somit insbesondere eine Dicke der Werkstücke an dem Schweißpunkt 125 charakterisiert. Beispielsweise kann der Parameterschwellwert als eine Summe des aktuellen Lageistwerts und eines Toleranzwerts bestimmt werden, wobei dieser Toleranzwert beispielsweise ein vorgebbarer Prozentsatz des aktuellen Lageistwerts sein kann.

In Schritt 204 erfolgt der Schweißprozess, im Zuge dessen die Schweißelektroden 111, 112 für die Dauer der Schweißzeit mit dem Schweißstrom bestromt werden.

Nach dem Ende der Schweißzeit und nachdem die Bestromung der Schweißelektroden 111, 112 beendet wurde, erfolgt in Schritt 205 die sog. Nachhaltephase, während welcher die Schweißelektroden 111, 112 noch mit der Elektrodenkraft gegen den Schweißpunkt 125 der Werkstücke 121, 122 gepresst, aber nicht mehr mit dem Schweißstrom bestromt werden. Entsprechend der Vorhaltephase 202 wird auch während der Nachhaltephase ein zeitlicher Verlauf eines eine Schweißelektrodenposition einer oder beider Schweißelektroden kennzeichnenden Schweißelektrodenparameters bestimmt. Beispielsweise wird auch während der Nachhaltephase der zeitliche Verlauf des Lageistwerts des Elektrodenantriebs 130 als dieser Schweißelektrodenparameter bestimmt.

In Schritt 206 wird überprüft, ob dieser zeitliche Verlauf des Lageistwerts wenigstens ein charakteristisches Merkmal erfüllt. Insbesondere wird dabei überprüft, ob ein Absolutwert des Lageistwerts den in Schritt 203 bestimmten Parameterschwellwert erreicht und/oder ob ferner eine Steigung des zeitlichen Verlaufs einen vorgegebenen Gradientenschwellwert erreicht.

Der Schwellwert für den Lageistwert stellt insbesondere einen Maximalwert für die Dicke des abgekühlten Schweißpunkt 125 dar, wobei ein Unterschreiten des Maximalwerts insbesondere darauf hindeutet, dass der Schweißpunkt 125 ausreichend abgekühlt und ausgehärtet ist und dass die Schweißverbindung eine notwendige Festigkeit erreicht hat.

Der Gradientenschwellwert für die Steigung kann beispielsweise fest vorgegeben und in der Steuereinheit 140 hinterlegt sein. Insbesondere charakterisiert die Steigung des Lageistwerts die Verringerung der Geschwindigkeit des thermischen Schrumpfens und somit den Abkühlvorgang des Schweißpunkts 125. Erreicht die Steigung den entsprechenden Gradientenschwellwert, deutet dies insbesondere darauf hin, dass sich die Schweißelektroden nur noch langsam oder kaum mehr aufeinander zu bewegen und dass sich die Dicke des Schweißpunkts langsam oder kaum mehr verringert. Auch das Erreichen dieses Gradientenschwellwerts deutet auf eine ausreichende Abkühlung des Schweißpunkts 125 hin.

Wenn in Schritt 207 sowohl der Lageistwert als auch die Steigung des zeitlichen Verlaufs des Lageistwerts den jeweiligen Schwellwert erreichen, deutet dies darauf hin, dass die Schweißverbindung eine ausreichende Festigkeit erreicht hat und die Nachhaltephase beendet werden kann.

In diesem Fall wird in Schritt 208 überprüft, ob die Dauer der Nachhaltephase einen vorgegebenen Minimalwert erreicht hat. Wenn dies der Fall ist, wird die Nachhaltephase in Schritt 209 beendet und die Schweißelektroden 111, 112 werden von dem Schweißpunkt wegbewegt.

Wenn die Dauer der Nachhaltephase jedoch den vorgegebenen Minimalwert noch nicht erreicht hat, obwohl basierend auf der Überprüfung 206 des zeitlichen Verlaufs des Lageistwerts bestimmt wird, die Nachhaltephase beenden zu können, deutet dies auf einen Fehler hin. In diesem Fall wird in Schritt 210 eine Fehlermeldung ausgegeben und die Nachhaltephase wird zumindest noch bis zum Erreichen des vorgegebenen Minimalwerts durchgeführt.

Ferner kann ein Fehler auch dazu führen, dass die Nachhaltephase basierend auf der Überprüfung des zeitlichen Verlaufs des Lageistwerts nicht beendet wird, obwohl der Schweißpunkt 125 bereits ausreichend abgekühlt und ausgehärtet ist. Daher wird in Schritt 206 neben der Überprüfung des zeitlichen Verlaufs des Lageistwerts zusätzlich überprüft, ob die Dauer der Nachhaltphase einen vorgegebenen Maximalwert erreicht. Wenn die Dauer diesen Maximalwert erreicht, obwohl der Lageistwert und dessen Steigung noch nicht den jeweiligen Schwellwert erreicht haben, deutet dies auf einen entsprechenden Fehler hin. In diesem Fall wird in Schritt 211 eine entsprechende Fehlermeldung ausgegeben und die Nachhaltephase wird beendet.

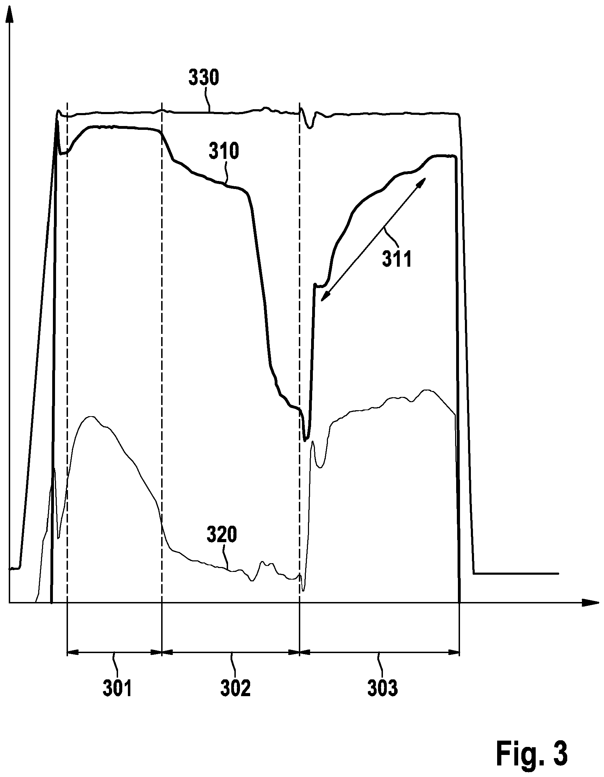

Figur 3 zeigt schematisch zeitliche Verläufe von Schweißelektrodenparametern des Elektrodenantriebs 130 während des Widerstandsschweißens.

Kurve 310 zeigt beispielsweise den zeitlichen Verlauf des Lageistwerts, Kurve 320 eines Drehmomentistwerts und Kurve 330 eines Elektrodenkraftistwerts. Die zeitlichen Verläufe 310, 320, 330 sind während der Vorhaltephase 301, während des eigentlichen Schweißprozesses 302 und während der Nachhaltephase 303 dargestellt.

Wie in Figur 3 zu erkennen ist, ändert sich der zeitliche Verlauf des Lageistwerts 310 während einer Abkühlphase 311 des Schweißpunkts während der Nachhaltephase 303 stetig, bis der Lageistwerts einen im Wesentlichen konstanten Wert erreicht und die Steigung des zeitlichen Verlaufs im Wesentlichen auf Null sinkt. Der Lageistwert bzw. dessen zeitlicher Verlauf bietet sich daher besonders an, um auf den Abkühlvorgang des Schweißpunkts rückzuschließen.

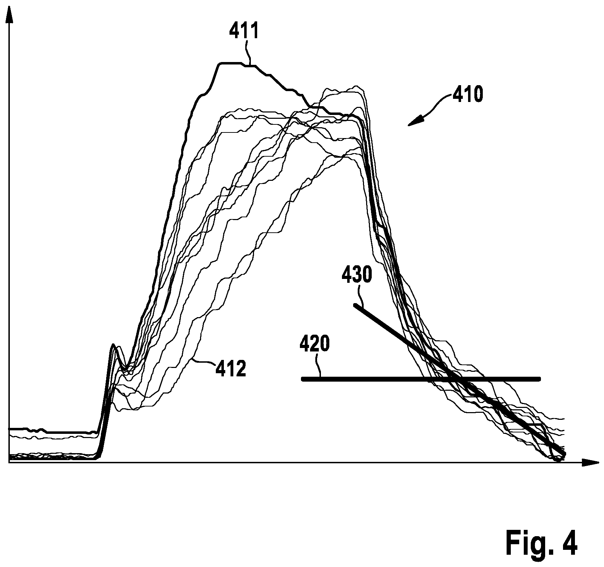

Figur 4 zeigt schematisch eine Vielzahl von zeitlichen Verläufen 410 von Lageistwerten von Schweißelektroden im Zuge einer Vielzahl verschiedener Widerstandsschweißvorgänge und somit an einer Vielzahl verschiedener Schweißpunkte. Es sei darauf hingewiesen, dass die Skala der y-Achse in Figur 4 im Vergleich zu der die Kurve 310 aus Figur 3 betreffende Skala vertauscht ist.

Diese verschiedenen Widerstandsschweißvorgänge wurden beispielsweise an derselben Blechdickenkombination durchgeführt. Die Blechdickenkombination und somit die Gesamtblechdicke war beispielsweise für alle gezeigten Kurven 410 gleich. Mit 411 ist beispielsweise die Kurve für den Schweißpunkt mit dem größten Punktdurchmesser bzw. der größten Punktabmessung in Richtung der Elektrodenachsen bezeichnet und mit 412 beispielsweise die Kurve für den Schweißpunkt mit dem kleinsten Punktdurchmesser. Für die Vielzahl der zeitlichen Verläufe 410 ist in Figur 4 ferner der entsprechende Parameterschwellwert 420 für den Absolutwert des Lageistwerts dargestellt sowie ferner der Gradientenschwellwert 430 für die Steigung der zeitlichen Verläufe.

## Patentansprüche

1. Verfahren zum Widerstandsschweißen von Werkstücken (121, 122),
wobei Schweißelektroden (111, 112) mit Hilfe eines Elektrodenantriebs (130) mit einer Elektrodenkraft gegen einen Schweißpunkt (125) der Werkstücke (121, 122) gepresst werden (201, 202),
wobei im Zuge eines Schweißprozesses (302) die Schweißelektroden (111, 112) für die Dauer einer Schweißzeit mit einem Schweißstrom bestromt werden (204) und
wobei die Schweißelektroden (111, 112) nach einem Ende der Schweißzeit im Zuge einer Nachhaltephase (303) mit der Elektrodenkraft gegen den Schweißpunkt (125) der Werkstücke (121, 122) gepresst werden (205),
wobei im Zuge der Nachhaltephase (303) ein zeitlicher Verlauf (310, 320, 330, 410) eines eine Schweißelektrodenposition einer oder beider Schweißelektroden (111, 112) kennzeichnenden Schweißelektrodenparameters bestimmt wird (205),
wobei als der Schweißelektrodenparameter ein Antriebsparameter des Elektrodenantriebs bestimmt wird,
wobei überprüft wird, ob der zeitliche Verlauf (310, 320, 330, 410) des Schweißelektrodenparameters wenigstens ein charakteristisches Merkmal erfüllt (206),
wobei der zeitliche Verlauf (310, 320, 330, 410) des Schweißelektrodenparameters das wenigstens eine charakteristische Merkmal erfüllt, wenn der Schweißelektrodenparameter einen Parameterschwellwert (420) erreicht und/oder wenn eine Steigung des zeitlichen Verlaufs (310, 320, 330, 410) des Schweißelektrodenparameters einen Gradientenschwellwert (430) erreicht,
wobei in Abhängigkeit von dieser Überprüfung bestimmt wird (206), wann die Nachhaltephase (303) beendet wird (209),
wobei das wenigstens eine charakteristische Merkmal zumindest teilweise in Abhängigkeit von einer Vorhaltephase (202, 301) vorgegeben wird, wobei die Schweißelektroden (111, 112) im Zuge dieser Vorhaltephase (202, 301) vor einem Beginn des Schweißprozesses (302) mit der Elektrodenkraft gegen den Schweißpunkt (125) der Werkstücke (121, 122) gepresst werden und nicht mit dem Schweißstrom bestromt werden,
wobei im Zuge der Vorhaltephase (202, 301) ein zeitlicher Verlauf (310, 320, 330, 410) des Schweißelektrodenparameters bestimmt wird (202),
**dadurch gekennzeichnet, dass**
das wenigstens eine charakteristische Merkmal zumindest teilweise in Abhängigkeit von dem im Zuge der Vorhaltephase (202, 301) bestimmten zeitlichen Verlauf des Schweißelektrodenparameters bestimmt wird (203).

2. Verfahren nach Anspruch 1, wobei der Parameterschwellwert (420) für den Schweißelektrodenparameter in Abhängigkeit von dem im Zuge der Vorhaltephase (301) bestimmten zeitlichen Verlauf des Schweißelektrodenparameters bestimmt wird (203).

3. Verfahren nach einem der vorstehenden Ansprüche, wobei ferner im Zuge der Nachhaltephase (303) überprüft wird, ob eine Dauer der Nachhaltephase (303) einen vorgegebenen Minimalwert erreicht und/oder einen vorgegebenen Maximalwert erreicht (206, 208).

4. Verfahren nach Anspruch 3, wobei eine vorgegebene Maßnahme durchgeführt wird, insbesondere eine Fehlermeldung ausgegeben wird, wenn die Nachhaltephase (303) basierend auf der Überprüfung des zeitlichen Verlaufs (310, 320, 330, 410) des Schweißelektrodenparameters beendet wird, bevor die Dauer der Nachhaltephase (303) den vorgegebenen Minimalwert erreicht (210), oder wenn die Nachhaltephase (303) basierend auf der Überprüfung des zeitlichen Verlaufs (310, 320, 330, 410) des Schweißelektrodenparameters nicht beendet wird, bevor die Dauer der Nachhaltephase (303) den vorgegebenen Maximalwert erreicht (211).

5. Verfahren nach einem der vorstehenden Ansprüche, wobei als Antriebsparameter des Elektrodenantriebs ein Lageistwert (310, 410) einer oder beider Elektroden (111, 112) und/oder ein Drehmomentistwert (320) des Elektrodenantriebs (130) bestimmt wird.

6. Schweißgerät (100) zum Widerstandsschweißen, wobei das Schweißgerät (100) eine Schweißzange (110) mit Schweißelektroden (111, 112), einen Elektrodenantrieb (130) zum Bewegen der Schweißelektroden (111, 112) und eine Steuereinheit (140) aufweist, **dadurch gekennzeichnet dass** die Steuereinheit (140) so eingereicht ist, dass das Schweißgerät ein Verfahren gemäß einem der Ansprüche 1 bis 5 durchführt.

7. Computerprogramm, umfassend Befehle, die bewirken, dass das Schweißgerät (100) nach Anspruch 6 die Verfahrensschritte nach einem der Ansprüche 1 bis 5 ausführt.

8. Maschinenlesbares Speichermedium mit einem darauf gespeicherten Computerprogramm nach Anspruch 7.

## Claims

1. Method for resistance welding of workpieces (121, 122),
wherein welding electrodes (111, 112) are pressed against a welding point (125) of the workpieces (121, 122) with the aid of an electrode drive (130) with an electrode force (201, 202),
wherein, in the course of a welding process (302), the welding electrodes (111, 112) are energized with a welding current for the duration of a welding time (204), and
wherein the welding electrodes (111, 112) are pressed against the welding point (125) of the workpieces (121, 122) with the electrode force after the end of the welding time in the course of a post-holding phase (303) (205),
wherein, in the course of the post-holding phase (303), a temporal profile (310, 320, 330, 410) of a welding electrode parameter characterizing a welding electrode position of one or both welding electrodes (111, 112) is determined (205),
wherein a drive parameter of the electrode drive is determined as the welding electrode parameter,
wherein a check is carried out to determine whether the temporal profile (310, 320, 330, 410) of the welding electrode parameter satisfies at least one characteristic feature (206),
wherein the temporal profile (310, 320, 330, 410) of the welding electrode parameter satisfies the at least one characteristic feature if the welding electrode parameter reaches a parameter threshold value (420) and/or if a gradient of the temporal profile (310, 320, 330, 410) of the welding electrode parameter reaches a gradient threshold value (430),
wherein, on the basis of this check, it is determined (206) when the post-holding phase (303) is ended (209),
wherein the at least one characteristic feature is predefined at least partially on the basis of a pre-holding phase (202, 301), wherein the welding electrodes (111, 112), in the course of this pre-holding phase (202, 301), are pressed against the welding point (125) of the workpieces (121, 122) with the electrode force before the start of the welding process (302) and are not energized with the welding current,
wherein, in the course of the pre-holding phase (202, 301) a temporal profile (310, 320, 330, 410) of the welding electrode parameter is determined (202),
**characterized in that**
the at least one characteristic feature is determined at least partially on the basis of the temporal profile of the welding electrode parameter, which temporal profile is determined in the course of the pre-holding phase (202, 301) (203).

2. Method according to Claim 1, wherein the parameter threshold value (420) for the welding electrode parameter is determined on the basis of the temporal profile of the welding electrode parameter, which temporal profile is determined in the course of the pre-holding phase (301) (203).

3. Method according to either of the preceding claims, wherein, furthermore, in the course of the post-holding phase (303), a check is carried out to determine whether a duration of the post-holding phase (303) reaches a predefined minimum value and/or reaches a predefined maximum value (206, 208).

4. Method according to Claim 3, wherein a predefined measure is carried out, in particular a fault notification is output, if, on the basis of the check of the temporal profile (310, 320, 330, 410) of the welding electrode parameter, the post-holding phase (303) is ended before the duration of the post-holding phase (303) reaches the predefined minimum value (210), or if, on the basis of the check of the temporal profile (310, 320, 330, 410) of the welding electrode parameter, the post-holding phase (303) is not ended before the duration of the post-holding phase (303) reaches the predefined maximum value (211).

5. Method according to one of the preceding claims, wherein a position actual value (310, 410) of one or both electrodes (111, 112) and/or a torque actual value (320) of the electrode drive (130) are/is determined as the drive parameter of the electrode drive.

6. Welding device (100) for resistance welding, wherein the welding device (100) has a welding gun (110) comprising welding electrodes (111, 112), an electrode drive (130) for moving the welding electrodes (111, 112) and a control unit (140), **characterized in that** the control unit (140) is configured in such a way that the welding device carries out a method according to one of Claims 1 to 5.

7. Computer program comprising commands that cause the welding device (100) according to Claim 6 to carry out the method steps according to one of Claims 1 to 5.

8. Machine-readable storage medium with a computer program according to Claim 7 stored thereon.

## Revendications

1. Procédé de soudage par résistance de pièces (121, 122),
dans lequel des électrodes de soudage (111, 112) sont pressées (201, 202), avec une force d'électrode, contre un point de soudage (125) des pièces (121, 122) à l'aide d'un système d'entraînement (130) des électrodes,
dans lequel, au cours d'un processus de soudage (302), les électrodes de soudage (111, 112) sont alimentées (204) par un courant de soudage pendant la durée d'un temps de soudage et
les électrodes de soudage (111, 112) étant pressées (205) après la fin du temps de soudage au cours d'une phase de maintien (303) avec la force des électrodes contre le point de soudage (125) des pièces (121, 122),
une évolution dans le temps (310, 320, 330, 410) d'un paramètre d'électrode de soudage caractérisant une position d'électrode de soudage d'une ou des deux électrodes de soudage (111, 112) étant déterminée (205) au cours de la phase de maintien (303),
un paramètre d'entraînement du système d'entraînement d'électrodes étant déterminé en tant que paramètre d'électrode de soudage,
dans lequel il est vérifié si l'évolution dans le temps (310, 320, 330, 410) du paramètre d'électrode de soudage remplit au moins une caractéristique (206),
l'évolution dans le temps (310, 320, 330, 410) du paramètre d'électrode de soudage remplissant ladite au moins une caractéristique lorsque le paramètre d'électrode de soudage atteint une valeur seuil de paramètre (420) et/ou lorsqu'une pente de l'évolution dans le temps (310, 320, 330, 410) du paramètre d'électrode de soudage atteint une valeur seuil de gradient (430),
il est déterminé (206), en fonction de ce contrôle, quand la phase de maintien (303) est terminée (209),
ladite au moins une caractéristique étant prédéfinie au moins en partie en fonction d'une phase de maintien (202, 301), les électrodes de soudage (111, 112) étant pressées au cours de cette phase de maintien (202, 301) avant un début du processus de soudage (302) avec la force des électrodes contre le point de soudage (125) des pièces (121, 122) et n'étant pas alimentées par le courant de soudage,
une évolution dans le temps (310, 320, 330, 410) du paramètre d'électrode de soudage étant déterminée (202) au cours de la phase de maintien (202, 301),
**caractérisé en ce que**
ladite au moins une caractéristique est déterminée (203) au moins en partie en fonction de l'évolution dans le temps du paramètre d'électrode de soudage déterminée au cours de la phase de maintien (202, 301).

2. Procédé selon la revendication 1, dans lequel la valeur seuil de paramètre (420) pour le paramètre d'électrode de soudage est déterminée (203) en fonction de l'évolution dans le temps du paramètre d'électrode de soudage déterminée au cours de la phase de maintien (301).

3. Procédé selon l'une des revendications précédentes, dans lequel on vérifie en outre, au cours de la phase de maintien (303), si une durée de la phase de maintien (303) atteint une valeur minimale prédéterminée et/ou atteint une valeur maximale prédéterminée (206, 208).

4. Procédé selon la revendication 3, dans lequel une mesure prédéfinie est exécutée, en particulier un message d'erreur est émis lorsque la phase de maintien (303) est terminée sur la base du contrôle de l'évolution dans le temps (310, 320, 330, 410) du paramètre de l'électrode de soudage, avant que la durée de la phase de maintien (303) n'atteigne la valeur minimale prédéterminée (210), ou si la phase de maintien (303) n'est pas terminée avant que la durée de la phase de maintien (303) n'atteigne la valeur maximale prédéterminée (211), sur la base du contrôle de l'évolution dans le temps (310, 320, 330, 410) du paramètre d'électrode de soudage.

5. Procédé selon l'une des revendications précédentes, dans lequel on détermine en tant que paramètre d'entraînement du système d'entraînement des électrodes une valeur réelle de position (310, 410) d'une ou des deux électrodes (111, 112) et/ou une valeur réelle de couple (320) du système (130) d'entraînement des électrodes.

6. Appareil de soudage (100) pour le soudage par résistance, l'appareil de soudage (100) comprenant une pince de soudage (110) avec des électrodes de soudage (111, 112), un système d'entraînement (130) des électrodes pour déplacer les électrodes de soudage (111, 112) et une unité de commande (140), **caractérisé en ce que** l'unité de commande (140) est conçue de telle sorte que l'appareil de soudage mette en œuvre un procédé selon l'une des revendications 1 à 5.

7. Programme d'ordinateur comprenant des instructions pour que l'appareil de soudage (100) selon la revendication 6 mette en œuvre les étapes du procédé selon l'une quelconque des revendications 1 à 5.

8. Support de stockage lisible par une machine, sur lequel est stocké un programme d'ordinateur selon la revendication 7.
